# EUROPEAN PATENT SPECIFICATION

(11) **EP 1 485 429 B1**
(45) Date of publication and mention of the grant of the patent: **13.05.2009**
(21) Application number: 03724911.7
(22) Date of filing: 06.03.2003
(51) Int. Cl.: C08J 9/00, C08L 25/04, C08J 9/16

(54) **PROCESS FOR THE PREPARATION OF COMPOSITIONS BASED ON EXPANDABLE VINYLAROMATIC POLYMERS WITH AN IMPROVED EXPANDABILITY**
VERFAHREN ZUR HERSTELLUNG VON ZUSAMMENSETZUNGEN AUF BASIS VON EXPANDIERBAREN STYROLPOLYMERISATEN MIT VERBESSERTER EXPANDIERBARKEIT
PROCEDE POUR LA PREPARATION DE COMPOSITIONS A BASE DE POLYMERES VINYL-AROMATIQUES SUSCEPTIBLES D'EXPANSION, A COEFFICIENT D'EXPANSION AMELIORE

(30) Priority: 20.03.2002 IT MI20020584
(43) Date of publication of application: 15.12.2004
(73) Proprietor: Polimeri Europa S.p.A., 20097 San Donato Milanese (MI) (IT)
(72) Inventor: CASALINI, Alessandro, I-46100 Mantova (IT); LONGO, Aldo, I-46100 Mantova (IT); GHIDONI, Dario, I-46023 Gonzaga-Mantova (IT); LANFREDI, Roberto, I-46030 Virgilio-Mantova (IT)
(74) Representative: De Gregori, Antonella
(86) International application number: PCT/EP2003/002274
(87) International publication number: WO 2003/078517

(56) References cited:
- EP-A- 0 305 862
- EP-A- 1 142 942
- DE-A- 4 321 356
- US-A- 5 342 857
- US-A- 6 166 099
- DATABASE WPI Section Ch, Week 199302 Derwent Publications Ltd., London, GB; Class A13, AN 1993-015379 XP002221560 & JP 04 345635 A (NIPPON GE PLASTICS KK) 1 December 1992 (1992-12-01)

## Description

The present invention relates to compositions based on vinylaromatic polymers with an improved expandability and related process for their production

More specifically, the present invention relates to compositions based on polystyrene, with an improved expandability.

Vinylaromatic polymers, and among these, polystyrene in particular, are known products which have been adopted for a long time for preparing compact and/or expanded articles which can be used in various applicative sectors, among which the most important are household appliances, the transport and building industries, office machines, etc. A particularly interesting sector is the field of thermal insulation, where vinylaromatic polymers are essentially used in expanded form.

These expanded products are obtained by pre-foaming in a pre-expander beads of expandable polymer previously impregnated with an expanding agent and molding the prefoamed particles contained inside a closed mould by means of the contemporaneous effect of pressure and temperature. The foaming of the particles is generally effected with vapour, or another gas, maintained at a temperature slightly higher than the glass transition temperature (Tg) of the polymer.

It is known that the expandability of vinylaromatic polymers, referring to the possibility of obtaining low density products without their collapsing, can be improved by means of suitable additives.

According to European patent 217,516, for example, the expandability of vinylaromatic polymers can be improved by adding plasticizers such as rubbers or oils, to the polymer. Additives contained in resins effectively cause a good, immediate expansion but, as they remain englobed in the polymeric matrix, they cause the products to collapse with a consequent deterioration in the density.

The use of oligomers of aliphatic olefins, as described in U.S. patent 5,783,612, also improves, for example, the expandability of polystyrene but reduces the processability range.

It has been verified that the reduction of the molecular weight of polymers to values lower than 50,000 also implies an excellent expandability but with the detriment of the processability and mechanical characteristics of the end-product.

The Applicant has now found that this and other objects, which will appear evident from the following description, can be obtained through a process for preparing in continuous mass, expandable mixtures based on vinylaromatic polymer compositions, which comprises the following steps in series:
i. feeding to an extruder a vinylaromatic polymer having a molecular weight Mw ranging from 70,000 to 150,000, together with 0-50% by weight of a copolymer (a), obtained by polymerizing one or more vinylaromatic monomers and 0.1-15% by weight of an α-alkylstyrene, and 0-10% by weight of a compatible polymer (b) with a crystallinity lower than 10% and a glass transition temperature (Tg) higher than 100°C, with the proviso that at least one of (a) or (b) is present in the mixture;
ii. heating the polymers to a temperature higher than the relative melting point;
iii. injecting the expanding agents into the molten product before extrusion through a die; and
iv. forming beads, optionally expandable, through a die, in a substantially spherical form with an average diameter ranging from 0.2 to 2 mm.

US 5,342,857 discloses a process to produce polystirene foam comprising mixing a predetermined amount of masterbatch and a styrenic polymer, heating this mixture, injecting CO₂ and/or nitrogen in gas or liquid form, as a blowing agent and subsequently extruding the resulting polystyrene foam.

US 6,166,099 discloses foams of vinyl aromatic polymers comprising from 10 to 45 wt% of a star branched aromatic polymer and related process for the production of extrusion foam including blowing with conventional blowing agents and inert gases including CO₂.

EP 0305862 discloses a process for the production of expandable beads comprising a polyphenylene ether resin alone or combined with an alkenyl aromatic polymer, such as polystirene, and a blowing agent, wherein the resin is melted and mixed and the blowing agent is introduced thereto in an extruder.

None of the cited documents discloses any particular choice of the molecular weight of the vinyl aromatic monomer which undergoes the polymerization process in order to achieve a correct expansion and expandable products therefrom.

Object of the present invention is to provide an improved process for preparing expandable products based on vinylaromatic polymer compositions, in the presence of alpha-alkyl styrene monomer.

The term "vinylaromatic monomer", as used in the present description and claims, essentially refers to a product which corresponds to the following general formula: 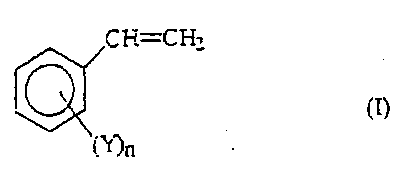 wherein n is zero or an integer ranging from 1 to 5 and Y is a halogen, such as chlorine or bromine, or an alkyl or alkoxyl radical having from 1 to 4 carbon atoms.

Examples of vinylaromatic monomers having the general formula defined above are: styrene, nethylstyrene, ethylstyrene, butylstyrene, dimethylstyrene, mono-, di-, tri-, tetra- and penta-chlorostyrene, bromo-styrene, methoxy-styrene, acetoxy-styrene, etc. Styrene is the preferred vinylaromatic monomer.

The vinylaromatic monomers having general formula (I) can be used alone or in a mixture of up to 50% by weight with other copolymerizable monomers. Examples of these monomers are (meth) acrylic acid; C₁-C₄ alkyl esters of (meth) acrylic acid, such as methyl acrylate, methylmethacrylate, ethyl acrylate, ethylmethacrylate, isopropyl acrylate, butyl acrylate; amides and nitriles of (meth)acrylic acid such as acrylamide, methacrylamide, acrylonitrile, methacrylonitrile; butadiene, ethylene, divinylbenzene, maleic anhydride, etc. Preferred copolymerizable monomers are acrylonitrile and methylmethacrylate.

The vinylaromatic polymer or copolymer which is obtained has a molecular weight Mw ranging from 70,000 to 150,000.

The vinylaromatic monomers are also copolymerized with an α-alkylstyrene in quantities ranging from 0.1 to 15% by weight, preferably from 2 to 10%, to give the copolymer (a). The preferred α-alkylstyrene according to the present invention is α-methylstyrene, α-ethylstyrene or α-propylstyrene. α-methylstyrene is particularly preferred.

Any expanding agent capable of being englobed in the polymeric matrix can be used in a combination with the vinylaromatic polymers. In general, liquid substances can be used, with a boiling point ranging from 10 to 100°C, preferably from 20 to 80°C. Typical examples are aliphatic hydrocarbons, freon, carbon dioxide, water, etc.

The expanding agent (c) can be added to the polymeric mixture during the polymerization phase, as described below, or, alternatively, by impregnation of the beads produced at the end of the polymerization or by injection into the molten product. At the end of the addition, a polymer is obtained, which can be transformed to produce expanded articles with a density ranging from 5 to 50 g/l, preferably from 8 to 25 g/l, with an excellent thermal insulation capacity. In order to favour the retention of the expanding agent in the polymeric matrix, additives capable of forming bonds both of the weak type(for example hydrogen bridges) or strong type (for example acid-base adducts) can be used with the expanding agent. Examples of these additives are methyl alcohol, isopropyl alcohol, dioctylphthalate, dimethylcarbonate, derivatives containing an amine group.

The compatible polymer (b) with a crystallinity degree lower than 10%, preferably equal to or lower than 5%, and a Tg higher than 100°C, is preferably used in quantities ranging from 2 to 8% by weight. Examples of these polymers are polyphenylethers, such as polyphenyleneoxide (PPO) and polycarbonates such as polycarbonats from tetramethylbisphenol A.

Conventional additives, generally used with commercial materials, such as pigments, stabilisers, flame-retardant agents, mineral fillers of athermanous materials, such as graphite or carbon black, or refracting and/or reflecting agents such as titanium dioxide, antistatic agents, detaching agents, shock-resistant agents, etc., can be added to the expandable vinylaromatic polymers.

At the end of the polymerization, substantially spherical polymer beads are obtained, with an average diameter ranging from 0.2 to 2 mm, inside which the expanding agent is homogeneously dispersed.

During the polymerization in suspension, polymerization additives, typically used for producing vinylaromatic polymers, are adopted, such as polymerization catalysts and chain transfer agents, through which it is also possible to regulate the molecular weight of the end-polymer, stabilizing agents of the suspension, expanding aids, nucleating agents, plasticizers, mineral fillers etc. In particular, it is preferable to add, during the polymerization, mineral fillers of athermanous materials, such as graphite, or refracting agents, such as titanium dioxide, in quantities ranging from 0.05 to 25% by weight, calculated with respect to the resulting polymer.

The expanding agents are preferably added during the polymerization phase and are selected from aliphatic or cycloaliphatic hydrocarbons containing from 3 to 6 carbon atoms such as n-pentane, isopentane, cyclopentane or their mixtures; the halogenated derivatives of aliphatic hydrocarbons containing from 1 to 3 carbon atoms such as, for example, dichlorodifluoromethane, 1 2,2-trifluoroethane, 1,1,2-trifluoroethane; carbon dioxide and water.

To improve the stability of the suspension, it is possible to increase the viscosity of the reagent solution by dissolving some vinylaromatic polymer therein, in a concentration ranging from 1 to 30% by weight, preferably from 5 to 20%, calculated with respect to the polymer alone. The solution can be obtained either by dissolving a preformed polymer (for example fresh polymer or the waste products of previous polymerizations and/or expansions) in the reagent mixture or by pre-polymerizing the monomer, or mixture of monomers, in mass, in order to obtain the above concentrations, and then continuing the polymerization in aqueous suspension in the presence of the remaining additives, in particular (b) and (c).

A detailed method for preparing expandable vinylaromatic polymers in continuous mass is provided in European patent EP 126,459.

At the end of the polymerization of the expandable vinylaromatic polymers, object of the present invention, the beads, either prepared in suspension or continuous mass process, are subjected to pre-treatment generally applied to traditional materials and which essentially consists in:
1. coating the beads with a liquid antistatic agent such as amines, tertiary ethoxylated alkylamines, ethylene oxide-propylene oxide copolymers, etc. The purpose of this agent is to facilitate both the adhesion of the coating and also the screening of the beads prepared in suspension;
2. applying the "coating" to the above beads, said "coating" essentially consists of a mixture of mono-, di- and tri-esters of glycerin (or other alcohols) with fatty acids and of metallic stearates such as zinc and/or magnesium stearate. A further object of the present invention relates to expandable beads of vinylaromatic polymers obtainable according to the aforementioned process, comprising 0.05-20% of athermaneous or refracting materials.

Some illustrative but non-limiting examples are provided for a better understanding of t.he present invention and for its embodiment.

### EXAMPLE 1

98 parts of polystyrene granules having an MFI (measured at 200°C/5 kg) of 25 g/10', a Mw of 130,000 and 2 parts of polyphenylene-ether (having a weight average molecular weight of 262,000), are fed into an extruder, through a hopper, and 500 ppm of polyethylene wax are added as nucleating agent.

6.5% of a mixture of n/i-pentane 80/20 is fed to the extruder, as expanding agent, through a specific injection line.

The polymer obtained containing the expanding agent is extruded through the holes of a die, cut by means of knives, baked at 60°C, dried and lubricated with 0.1% by weight of magnesium stearate and 0.3% by weight of glycerylmonostearate.

The beads are then expanded at various vaporization times and subsequently moulded into end-products. The expandability results are indicated in the following table.

### EXAMPLE 2

Example 1 is repeated, feeding 40 parts of styrene/α-methyl-styrene copolymer and 60 parts of the polystyrene used in Example 1.

6.2% of a mixture of n/i-pentane 80/20 is fed to the extruder as expanding agent. The copolymer contains 6.5% of α-methyl-styrene and has an Mw of 155,000. The expandability results are indicated in the following table.

### EXAMPLE 3 (comparative)

Example 1 is repeated but using 98 parts of a polystyrene having an MFI of 8 (Mw of 180,000), available on the market under the trade-name of Edistir N 1782 of ENICHEM S.p.A.

As can be seen from the table below, the product has only a very slight expansion, even if it does not collapse.

### EXAMPLE 4 (comparative)

Example 1 is repeated but using only polystyrene granules (therefore 100 parts).

As can be seen from the table below, the product expands very much but collapses.

### EXAMPLE 5 (comparative)

Example 4 is repeated but using only granules of polystyrene Edistir N 1782.

As can be seen from the table below, the product has only a very slight expansion, even if it does not collapse.

**TABLE 1**

| | Vapourization time (min.) | Density after 24 hours (g/l) |
|---|---|---|
| EXAMPLE 1 | 1 | 16.5 |
| | 2 | 14 |
| | 3 | 12.5 |
| | 5 | 11 |
| | 7 | 10.9 |
| | | |
| EXAMPLE 2 | 1 | 17 |
| | 2 | 13.8 |
| | 3 | 12.4 |
| | 5 | 11.1 |
| | 7 | 10.8 |
| EXAMPLE 3 | 2 | 19 |
| | 3 | 16.6 |
| | 5 | 14.8 |
| | 7 | 13.6 |
| | 10 | 12.7 |
| EXAMPLE 4 | 1 | 13 |
| | 2 | 12 |
| | 3 | 13 (*) |
| | | |
| EXAMPLE 5 | 1 | 18 |
| | 2 | 15.6 |
| | 3 | 13.9 |
| | 5 | 12.7 |
| | 7 | 12.5 |

| | | |
|---|---|---|
| (*) Strong collapsing of the end-product | | |

## Claims

1. A process for preparing in continuous mass, expandable vinylaromatic polymer compositions which comprises the following steps in series:
i. feeding a vinylaromatic polymer having a molecular weight Mw ranging from 70,000 to 150,000 to an extruder, together with 0-50% by weight of a copolymer (a), obtained by polymerizing one or more vinylaromatic monomers and 0.1-15% by weight of an α-alkylstyrene, and 0-10% by weight of a compatible polymer (b) with a crystallinity lower than 10% and a glass transition temperature (Tg) higher than 100°C, with the proviso that at least one of (a) or (b) is present in the mixture;
ii. heating the polymers to a temperature higher than the relative melting point;
iii. injecting the expanding agents into the molten product before extrusion through a die; and
iv. forming beads, optionally expandable, through a die, in a substantially spherical form with an average diameter ranging from 0.2 to 2 mm.

2. The process according to claim 1, wherein at the end of the polymerization, substantially spherical beads are obtained, with an average diameter ranging from 0.2 to 2 mm.

3. The process according to any of the previous claims wherein the expandable beads are subjected to a pretreatment consisting essentially of:
1. coating the beads with a liquid antistatic agent such as amines, tertiary ethoxylated alkylamines, ethylene oxide-propylene oxide copolymers;
2. applying the coating to said beads, said coating essentially consisting of a mixture of mono-, di- and tri-esters of glycerin with fatty acids and of metallic stearates such as zinc stearate.

4. Expandable beads of vinylaromatic polymers obtainable according to the process of any of the previous claims comprising 0.05-20% b.w. of athermaneous or refracting materials.

## Patentansprüche

1. Verfahren zur Herstellung von expandierbaren vinylaromatischen Polymerzusammensetzungen in kontinuierlicher Masse, welches nacheinander die folgenden Schritte umfasst:
i. Zuführen eines vinylaromatischen Polymers mit einem Molekulargewicht Mw in einem Bereich zwischen 70.000 und 150.000 zusammen mit 0 - 50 Gew.-% eines Copolymers (a), welches durch Polymerisieren eines oder mehrerer vinylaromatischer Monomere und 0,1 - 15 Gew.-% eines α-Alkylstyrols erhalten wurde, und 0 - 10 Gew.-% eines kompatiblen Polymers (b) mit einer Kristallinität von weniger als 10 % und mit einer Glasübergangstemperatur (Tg) von mehr als 100°C, mit der Maßgabe, dass wenigstens eines von (a) oder (b) in der Mischung vorhanden ist, zu einem Extruder,
ii. Erhitzen der Polymere auf eine Temperatur von höher als dem relativen Schmelzpunkt,
iii. Injizieren der Expandiermittel in das geschmolzene Produkt vor der Extrusion durch eine Düse, und
iv. Ausbilden von, optional expandierbaren Kügelchen durch eine Düse in einer im Wesentlichen kugelförmigen Form mit einem durchschnittlichen Durchmesser in einem Bereich zwischen 0,2 und 2 mm.

2. Verfahren nach Anspruch 1, wobei an dem Ende der Polymerisation im Wesentlichen kugelförmige Kügelchen mit einem durchschnittlichen Durchmesser in einem Bereich zwischen 0,2 und 2 mm erhalten werden.

3. Verfahren nach einem der vorhergehenden Ansprüche, wobei die expandierbaren Kügelchen einer Vorbehandlung unterworfen werden, welche im Wesentlichen besteht aus:
1. Beschichten der Kügelchen mit einem flüssigen Antistatikmittel, wie beispielsweise mit Aminen, tertiären ethoxylierten Alkylaminen, Ethylenoxid-Propylenoxid-Copolymeren,
2. Aufbringen der Beschichtung auf die Kügelchen, wobei die Beschichtung im Wesentlichen aus einer Mischung von Mono-, Di- und Triestern von Glycerin mit Fettsäuren und Metallstearaten, wie beispielsweise Zinkstearat, besteht.

4. Expandierbare Kügelchen aus vinylaromatischen Polymeren erhältlich nach einem Verfahren nach einem der vorstehenden Patentansprüche, welche 0,05 - 20 Gew.-% von athermalen oder refraktierenden Materialien enthalten.

## Revendications

1. Procédé pour la préparation en masse continue de compositions à base de polymères vinylaromatique expansibles qui comprend les étapes en série suivantes :
i. l'introduction d'un polymère vinylaromatique ayant une masse moléculaire Mw comprise entre 70000 et 150000 dans une extrudeuse, conjointement avec 0 à 50 % en poids d'un copolymère (a), obtenu en polymérisant un ou plusieurs monomères vinylaromatiques et 0,1 à 15 % en poids d'un α-alkylstyrène, et 0 à 10 % en poids d'un polymère compatible (b) ayant une cristallinité inférieure à 10 % et une température de transition vitreuse (Tg) supérieure à 100 °C, à condition qu'au moins l'un de (a) ou (b) soit présent dans le mélange ;
ii. le chauffage des polymères à une température supérieure au point de fusion relatif ;
iii. l'injection des agents gonflants dans le produit fondu avant l'extrusion à travers une filière ; et
iv. la formation de billes, facultativement expansibles, à travers une filière, dans une forme sensiblement sphérique ayant un diamètre moyen dans la gamme de 0,2 à 2 mm.

2. Procédé selon la revendication 1, dans lequel à la fin de la polymérisation, on obtient des billes sensiblement sphériques ayant un diamètre moyen dans la gamme de 0,2 à 2 mm.

3. Procédé selon l'une quelconque des revendications précédentes, dans lequel les billes expansibles sont soumises à un prétraitement consistant essentiellement à :
1. revêtir les billes d'un agent antistatique liquide tel que des amines, des alkylamines éthoxylées tertiaires, des copolymères d'oxyde d'éthylène et d'oxyde de propylène ;
2. appliquer le revêtement auxdites billes, ledit revêtement consistant essentiellement en un mélange de mono-, di- et triesters de glycérine avec des acides gras et des stéarates métalliques tels que le stéarate de zinc.

4. Billes expansibles de polymères vinylaromatiques pouvant être obtenues selon le procédé selon l'une quelconque des revendications précédentes comprenant 0,05 à 20 % en poids de matériaux athermanes ou réfractaires.
